Europäisches Patentamt

European Patent Office

Office européen des brevets

(19)

(11) Veröffentlichungsnummer: **0 211 202**
**B1**

(12) ## EUROPÄISCHE PATENTSCHRIFT

(45) Veröffentlichungstag der Patentschrift:
14.06.89

(51) Int. Cl.⁴: **G 01 B 7/03**

(21) Anmeldenummer: **86108373.1**

(22) Anmeldetag: **19.06.86**

(54) Steuerung für Koordinatenmessgeräte.

(30) Priorität: **28.06.85 DE 3523188**

(43) Veröffentlichungstag der Anmeldung:
**25.02.87 Patentblatt 87/9**

(45) Bekanntmachung des Hinweises auf die Patenterteilung:
**14.06.89 Patentblatt 89/24**

(84) Benannte Vertragsstaaten:
**CH DE FR GB LI**

(56) Entgegenhaltungen:
**DE-A- 2 921 166**
**DE-C- 2 242 355**
**US-A- 3 292 495**
**US-A- 4 224 670**

(73) Patentinhaber: **Firma Carl Zeiss, D-7920 Heidenheim (Brenz) (DE)**

(84) Benannte Vertragsstaaten: **CH DE FR LI**

(73) Patentinhaber: **CARL-ZEISS-STIFTUNG trading as CARL ZEISS, D-7920 Heidenheim (Brenz) (DE)**

(84) Benannte Vertragsstaaten: **GB**

(72) Erfinder: **Trieb, Gerhard, Ulmenweg 10,**
**D-7923 Königsbronn (DE)**
Erfinder: **Schepperle, Karl, Herschelstrasse 20,**
**D-7082 Oberkochen (DE)**
Erfinder: **Aubele, Karl-Eugen, Brechhülbstrasse 4,**
**D-7929 Gussenstadt (DE)**

**Beschreibung**

Die Erfindung betrifft ein Verfahren und eine Anordnung zur automatischen Vermessung eines Werkstücks auf einer Koordinatenmeßmaschine, wobei der Taststift der Meßmaschine kontinuierlich an der Werkstückoberfläche entlang geführt wird und die bei Auslenkung des Taststiftes von den Meßwandlern im Tastkopf abgegebenen Signale sowohl zur Bildung des Meßwertes als auch zur Steuerung der Maschinenantriebe verwendet werden.

Derartige das Werkstück kontinuierlich abtastende Meßverfahren werden als «Scan»-Verfahren oder «Scanning» bezeichnet. Bei bekannten Scanverfahren wird der Taststift des Tastkopfes bezüglich zweier Koordinatenrichtungen geklemmt und in Richtung einer der geklemmten Achsen verfahren, während der Taststift in der dritten Koordinate, im wesentlichen senkrecht zur Werkstückoberfläche beweglich ist und an dieser entlanggleitet. Zur Aufrechterhaltung des Kontakts zwischen Werkstück und Taststift und um eine gleichbleibende Antastkraft aufrechtzuerhalten wird der zur Messung der Tasterauslenkung in dieser dritten Koordinate dienende Meßwandler in den Positionsregelkreis für die betreffende Maschinenachse geschaltet.

Da die diesem Verfahren die Scanrichtung immer an eine Maschinenachse gebunden ist, muß dann, wenn der Winkel zwischen Verfahrrichtung und Werkstückoberfläche steil wird und etwa 60° übersteigt «umgeklemmt» werden, d.h. die Scanrichtung und die Meßrichtung werden miteinander vertauscht, wodurch der Meßvorgang erst einmal unterbrochen wird. Außerdem ändert sich die Meßkraft beim Scannen aufgrund der nicht zu vernachlässigenden Reibung zwischen Taststift und Werkstück abhängig vom Winkel zwischen Scanrichtung und Werkstückoberfläche.

Aus der DE-OS 2 921 166 ist es bekannt die Umschaltung zwischen Scanrichtung und Meßrichtung automatisch dann auszuführen, wenn die Steuerspannungen in den Regelkreisen der Antriebsachsen für die Meßrichtung und die Scanrichtung gleich sind.

Da auch bei diesem Verfahren die Scanrichtung an jeweils eine bestimmte Antriebskoordinate der Maschine gebunden ist, treten auch hier Änderungen der auf das Werkstück ausgeübten Meßkraft auf, die das Meßergebnis beeinflussen. Denn konstant gehalten wird ja nicht die resultierende Gesamtmeßkraft sondern nur die Komponente der Meßkraft in der vom Tastkopf geregelten Achse. Der Scanvorgang verläuft außerdem nicht gleichmässig, da nur die Geschwindigkeit in einer Antriebsrichtung, nicht jedoch die Geschwindigkeit entlang der eigentlichen, von der Werkstückgeometrie abhängigen Bahn konstant gehalten wird.

Aus der US-A-3 292 495 ist eine Steuerung für Kopierfräser beschrieben, in der die von einem Kopierfühler ausgegebenen Signale so auf die Antriebe der Maschine rückgekoppelt sind, daß die Abtastbewegung mit im wesentlichen konstanter Geschwindigkeit erfolgt. Hierzu werden den Antrieben der einen Achse (x) jeweils die auslenkungsabhängigen Signale des Fühlers in der anderen Richtung (y) zugeführt.

Damit diese Steuerung arbeiten kann, muß der Kopierfühler immer um einen bestimmten Betrag aus seiner Ruhelage ausgelenkt sein. Außerdem ist die Anlagekraft wegen der Federkennlinie des Kopierfühlers auslenkungsabhängig. Deshalb steht als Regelabweichung während des Abtastvorganges nur ein kleiner Teil des Meßbereichs des Kopierfühlers zur Verfügung und die Abtastgeschwindigkeit muß demzufolge klein gehalten werden.

Es ist die Aufgabe der vorliegende Erfindung ein Scanverfahren und eine zu dessen Durchführung geeignete Anordnung anzugeben, das einen möglichst gleichmäßigen Scanvorgang mit konstanter Gesamtmeßkraft bei hoher Geschwindigkeit gewährleistet.

Diese Aufgabe wird gemäß dem in den Ansprüchen 1 bzw. 3 angegebenen Maßnahmen gelöst.

Das Verfahren läßt sich mit Vorteil in Verbindung mit Tastköpfen des in der DE-PS 2 242 355 beschriebenen Typs durchführen, der aktive Tauchspulensysteme zur Aufbringung einer vorgegebenen auslenkungsunabhängigen Meßkraft auf den Taststift des Meßkopfes besitzt. Es ist dann zweckmäßig den Taststift vorauszulenken und mit konstanter, vom Betrag der Auslenkung unabhängiger Meßkraft im wesentlichen senkrecht zur Richtung der Verfahrgeschwindigkeit zu beaufschlagen. Damit kann der gesamte Auslenkungsbereich des Taststifts als Regelabweichung zugelassen werden, was höhere Verfahrensgeschwindigkeiten ohne Einbuße an Meßgenauigkeit ermöglicht.

Die Anordnung zur Durchführung des Verfahrens umfaßt eine Recheneinheit, der die Ausgangssignale mindestens zweier den beeinflußten Maschinenachsen zugeordnete Meßwandler des Tastkopfes zugeführt und der Betrag der Taststiftauslenkung und der Betrag der Gesamtgeschwindigkeit in den Maschinenachsen als Sollwert eingebbar sind. Diese Recheneinheit führt die den Komponenten der neu berechneten Bahngeschwindigkeit entsprechenden Signale den Geschwindigkeitsregelkreisen der verfahrbaren Maschinenachsen als Führungsgrössen zu.

Vorzugsweise werden dieser Recheneinheit die Signale aller den drei Raumrichtungen x, y, z zugeordneter Meßwandler im Taststift zugeführt und wirkt die Recheneinheit auf die Geschwindigkeitsregelkreise aller drei Maschinenachsen, damit die Lage der Ebene, in der das Werkstück abgetastet werden soll, frei wählbar ist.

Die Recheneinheit kann beispielsweise ein zur Steuerung aller Maschinenfunktionen dienender Prozessrechner sein. Es ist jedoch auch möglich statt dessen einen in die Positions- und Geschwindigkeitsregelkreise geschalteten, autonomen Mikroprozessor zur Berechnung der Änderung der Scanrichtung abhängig von der Taststiftauslenkung einzusetzen, dem seinerseits ein Steuerrechner vorgeschaltet ist, von dem der Betrag der Bahngeschwindigkeit, die Anfangsrichtung der Abtastbewegung, die Meßkraft und die Endposition etc. vorgegeben werden.

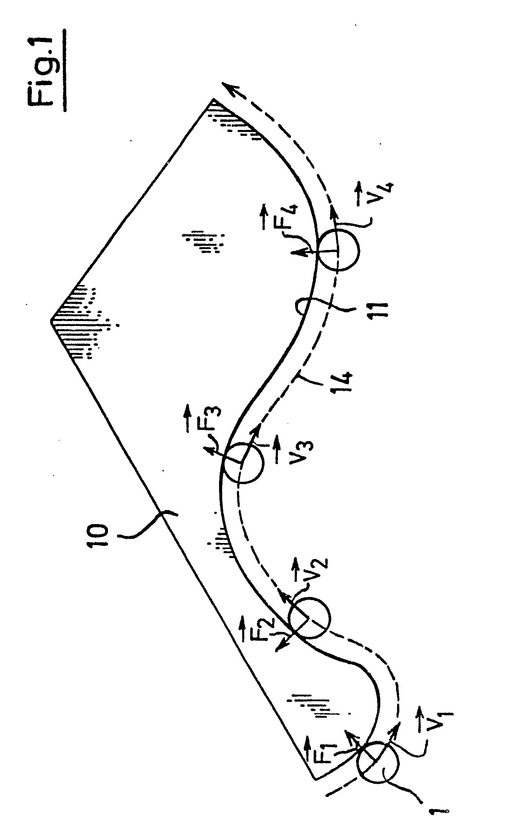

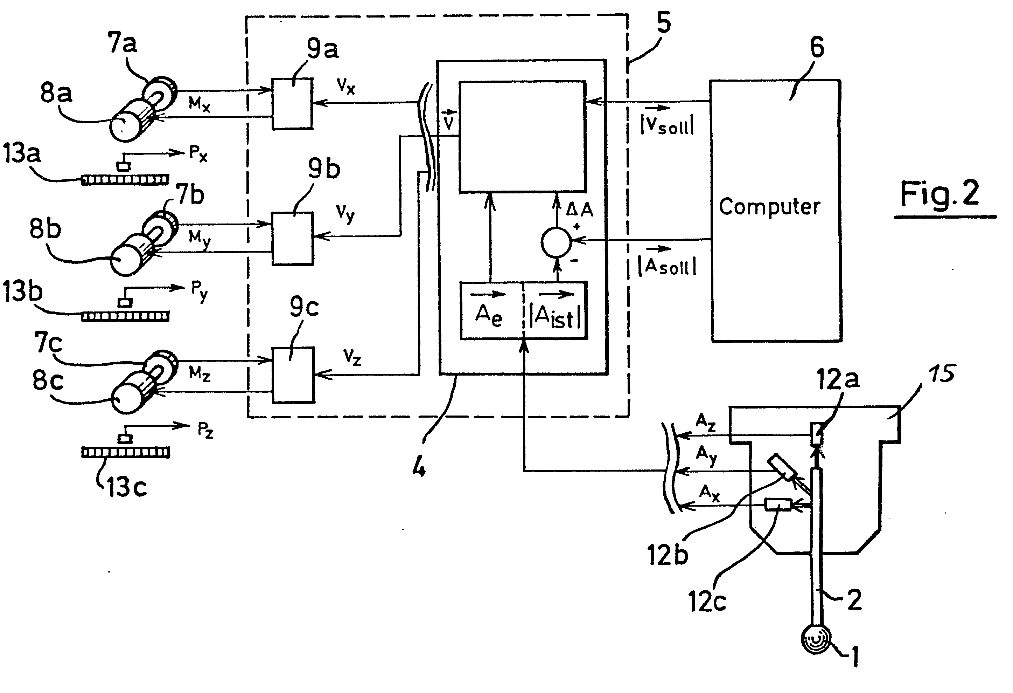

Nachfolgend wird das erfindungsgemässe Verfahren anhand des in den Fig. 1 und 2 der Zeichnungen dargestellten Ausführungsbeispiels näher erläutert:

Fig. 1 ist eine schematische Schnittdarstellung einer Werkstückkontur mit der Abtastlinie des daran entlang geführten Tasters;

Fig. 2 zeigt ein Blockschaltbild einer Anordnung zur Steuerung einer Meßmaschine gemäß der Erfindung.

In Figur 1 ist mit 10 ein Werkstück bezeichnet, das auf einer Koordinatenmeßmaschine entlang seiner Konturlinie 11 abgetastet werden soll. Die Tastkugel 1, die im permanenten Kontakt mit dem Werkstück 10 steht, folgt deshalb der zur Konturlinie 11 parallelen Abtastbahn 14.

Damit der Abtastvorgang gleichmässig und möglichst fehlerfrei erfolgt, ist eine Steuerung vorgesehen, die den Betrag $|\vec{V}|$ der Abtastgeschwindigkeit, mit der sich die Tastkugel 1 auf der gekrümmten Bahn 14 bewegt, konstant hält, d.h. für die gezeichneten Stellungen der Tastkugel gilt

$$|\vec{v_1}| = |\vec{v_2}| = |\vec{v_3}| = |\vec{v_4}|$$

Gleichzeitig wird die im wesentlichen senkrecht zur Konturlinie 11 gerichtete Meßkraft $\vec{F}$ betragsmäßig konstant gehalten, d.h. es gilt

$$|\vec{F_1}| = |\vec{F_2}| = |\vec{F_3}| = |\vec{F_4}|$$

Das Blockschaltbild einer Anordnung, die dieses leistet, ist in Fig. 2 skizziert:

drei Motore 8a-c, auf deren Wellen Tachogeneratoren 7a-c sitzen, stellen den Antrieb einer hier nicht näher gezeichneten Meßmaschine dar. Von den Motoren 8 wird der Tastkopf 15 der Meßmaschine in den drei Koordinaten x, y, z verfahren. Zur Meßwertbildung werden die Positionssignale $p_x$, $p_y$ und $p_z$ der den drei Maschinenachsen zugeordneten Längenmeßsysteme 13a, b und c die Signale $A_x$, $A_y$ und $A_z$ der die Auslenkung des Taststifts 2 messenden Signalgeber 12a, b und c des Tastkopfs 15 vom Steuerrechner 6 der Meßmaschine in bekannter Weise miteinander verknüpft. Auf die Meßwertbildung und Anzeige des Meßergebnisses soll hier nicht näher eingegangen werden.

Zur Steuerung des Antriebs der drei Maschinenachsen x, y und z befindet sich auf einer Platine 5 ein Mikroprozessor 4. Dieser Mikroprozessor liefert u.a. die Stellgrößen $v_x$, $v_y$, $v_z$ an die Geschwindigkeitsregelkreise 9a-c für die Antriebsmotoren 8a-c. Der elektronische Teil der Regelkreise 9a, b und c befindet sich ebenfalls auf der Platine 5.

Zur Durchführung des in Fig. 1 dargestellten Abtastvorganges erhält der Mikroprozessor 4 vom Steuerrechner 6 den Betrag $|\vec{V_{soll}}|$ der Bahngeschwindigkeit und den Betrag $|\vec{A_{soll}}|$ der Tasterauslenkung vorgegeben. Gleichzeitig erhält der Mikroprozessor 4 die Signale $A_x$, $A_y$ und $A_z$ der Meßwertgeber 12a-c im Tastkopf 15, aus denen der Istwert des Betrages der Tasterauslenkung $|\vec{A_{ist}}|$ und die Richtung der Taststiftauslenkung $\vec{A_e}$ berechnet wird.

Der Mikroprozessor 4 vergleicht den vorgegebenen Wert $|\vec{A_{soll}}|$ und den Istwert $|\vec{A_{ist}}|$ des Betrages der Tasterauslenkung und ändert dann, wenn Abweichungen $\Delta A$ zwischen diesen beiden Größen auftreten, die Richtung der Verfahrgeschwindigkeit V gemäß der nachstehend in vereinfachender Vektorschreibweise dargestellten Rechenvorschrift:

$$\vec{v_2} = \frac{\vec{v_0}}{\vec{v_0}} \cdot |\vec{v_{soll}}| \qquad \text{mit:}$$

$$\vec{v_0} = \vec{v_1} + \frac{\vec{A_{ist}}}{|A_{ist}|} \cdot \left( |\vec{A_{soll}}| - |\vec{A_{ist}}| \right) = \vec{v_1} + \vec{A_e} \cdot \Delta A$$

In dieser Schreibweise ist $\vec{A_e}$ der Einheitsvektor in Richtung der Tasterauslenkung und ergibt sich aus

$$\vec{A_e} = \frac{\vec{A_{ist}}}{|A_{ist}|}$$

Der neu berechnete Vektor der Bahngeschwindigkeit $\vec{v_2}$ ist also bei konstant gehaltenem Betrag gegenüber dem vektor der vorhergehenden Geschwindigkeit $\vec{v_1}$ in Richtung der Tasterauslenkung $\vec{A_e}$ gedreht.

Die vom Mikroprozessor berechnete neue Verfahrensgeschwindigkeit $v_2$ wird dann nach Aufspaltung in ihre Komponenten $v_x$, $v_y$ und $v_z$ als Stellgröße den Geschwindigkeitsregelkreisen 9a, b und c der Maschinenantriebe zugeführt.

Da die Anpassung der Abtastrichtung an die Taststiftauslenkung laufend in einem von der Zeitbasis des Mikroprozessorsystems abgeleiteten Takt erfolgt, paßt sich die Bewegung des Tastkopfs 15 abgesehen von der zulässigen Regelabweichung $\Delta A$ selbsttätig der Konturlinie 11 des Werkstücks 10 an. Denn sobald die Tasterauslenkung $|\vec{A_{ist}}|$ den vom Steuerrechner 6 vorgegebenen Sollwert $|\vec{A_{soll}}|$ überschreitet, ändert sich die Richtung der Bahngeschwindigkeit V in einer Weise, die der Abweichung $\Delta A$ entgegenwirkt. Bei im Verhältnis zur Bahngeschwindigkeit $\vec{V}$ genügend schnellem Rechentakt ergibt sich eine quasikontinuierliche Bewegung des Tastkopfs 15 entlang der Werkstückkontur.

Die in Fig. 2 dargestellte Anordnung läßt sich in Verbindung mit Tastköpfen des z.B. in der DE-PS 2 242 355 beschriebenen Typs verwenden, der aktive Tauchspulensysteme zur Aufschaltung einer auslenkungsunabhängigen Meßkraft auf den Taststift besitzt.

Bei derartigen Tastköpfen wird die Meßkraft auslenkungsunabhängig aufgeschaltet und zwar in einer von der aktuellen Bewegungsbahn abgeleiteten Richtung senkrecht zur Bahngeschwindigkeit. Der Vorgabewert $|\vec{A_{soll}}|$ für die Taststiftauslenkung kann dann 0 gesetzt bzw. sehr klein gehalten werden, so daß der gesamte Auslenkungsbereich des Taststifts 2 als Regelabweichung zur Verfügung steht. Dies erlaubt höhere Bahngeschwindigkeiten bei der Abtastbewegung.

**Patentansprüche**

1. Verfahren zur automatischen Vermessung eines Werkstücks (10) auf einer Koordinatenmeßmaschine, wobei

a) der Taststift (2) der Meßmaschine kontinuierlich an der Werkstückoberfläche entlang geführt wird und die bei einer Auslenkung $\vec{A}$ des Taststifts von den Meßwandlern im Tastkopf (15) abgegebenen Signale sowohl zur Bildung des Meßwerts als auch zur Steuerung der Maschinenantriebe (8a-c) verwendet werden,

b) der Betrag $|\vec{v}_{soll}|$ der als Vektorsumme aus den Einzelgeschwindigkeiten ($v_i$) in den Koordinatenrichtungen (i = x, y, z) resultierenden Bahngeschwindigkeit als Sollwert vorgegeben und im wesentlichen konstant gehalten wird,

c) die Tasterauslenkung bzw. deren Betrag $|\vec{A}_{soll}|$ ebenfalls vorgegeben und mit der gemessenen Tasterauslenkung bzw. deren Betrag $|\vec{A}_{ist}|$ verglichen wird,

d) ein der Abweichung $\Delta\vec{A}$ zwischen der gemessenen und vorgegebenen Tasterauslenkung entsprechendes Signal sowie ein der Richtung der Tasterauslenkung $\vec{A}_e$ entsprechendes Signal gebildet und zur Korrektur der Richtung $\vec{v}_e$ der Bahngeschwindigkeit $\vec{v}_{ist}$ benutzt wird,

e) die Änderung der Richtung der Bahngeschwindigkeit gemäß folgender Rechenvorschrift erfolgt:

$$\vec{v}_2 = \frac{\vec{v}_0}{|\vec{v}_0|} \cdot |\vec{v}_{soll}| \qquad \text{mit:}$$

$$\vec{v}_0 = \vec{v}_1 + \frac{\vec{A}_{ist}}{|\vec{A}_{ist}|} \cdot \left( |\vec{A}_{soll}| - |\vec{A}_{ist}| \right)$$

wobei bedeuten:

$\vec{v}_1$     der Geschwindigkeitsvektor vor der Richtungsänderung

$\vec{v}_2$     der Geschwindigkeitsvektor nach der Richtungsänderung

$\vec{A}_{ist}$     die gemessene Taststiftauslenkung

$\vec{A}_{soll}$     die vorgegebene Taststiftauslenkung

$|\vec{v}_{soll}|$     der vorgegebene Betrag der Bahngeschwindigkeit und

f) Der Taststift (2) mit konstanter, vom Betrag der Auslenkung unabhängiger Meßkraft im wesentlichen, senkrecht zur Richtung der Bahngeschwindigkeit $\vec{v}_e$ durch im Tastkopf befindliche Aktuatoren, z.B. Tauchspulensysteme, beaufschlagt wird.

2. Verfahren nach Anspruch 1, dadurch gekennzeichnet, daß die Vermessung des Werkstücks bei vorausgelenktem Taststift erfolgt.

3. Anordnung zur Steuerung der verfahrbaren Achsen einer Mehrkoordinatenmeßmaschine mit

a) einem Tastkopf (15), der Meßwandler (12a-c) enthält, die der Auslenkung des Taststifts (1,2) in den einzelnen Koordinatenrichtungen (x, y, z) proportionale Signale abgeben,

b) Antrieben (8a-c) für die Maschinenachsen, auf die die Signale zurückgekoppelt sind,

c) einer mindestens zwei Maschinenachsen gleichzeitig steuernden Recheneinheit (4), der die Ausgangssignale mindestens zweier den beeinflußten Maschinenachsen zugeordneter Meßwandler (12) des Tastkopfes (15) zugeführt sind, wobei

d) der Recheneinheit (4) die Taststiftauslenkung bzw. deren Betrag $|\vec{A}_{soll}|$ und der Betrag $|\vec{v}_{soll}|$ der Bahngeschwindigkeit der Abtastbewegung als Sollwerte eingebbar sind, und wobei

e) die Recheneinheit (4) die Richtung der Bahngeschwindigkeit entsprechend den Abweichungen der gemessenen Taststiftauslenkung vom vorgegebenen Sollwert neu berechnet und den Betrag der neu berechneten Bahngeschwindigkeit im wesentlichen konstant hält, indem sie

f) aus den Komponenten der neu berechneten Bahngeschwindigkeit ($v_x$, $v_y$, $v_z$) entsprechende Signale erzeugt, die den Geschwindigkeitsregelkreisen (9) der verfahrbaren Maschinenachsen als Führungsgröße zugeführt sind, dadurch gekennzeichnet, daß

g) im Tastkopf (15) eine Einrichtung vorgesehen ist, die eine im wesentlichen senkrecht zur Richtung der Bahngeschwindigkeit (v) wirkende, auslenkungsunabhängige Meßkraft mit konstantem Betrag auf den Taststift (2) des Tastkopfes aufschaltet, und

h) der Sollwert $A_{soll}$ der Taststiftauslenkung so klein gewählt ist, daß im wesentlichen der gesamte Auslenkungsbereich des Taststifts (2) als Regelabweichung zur Verfügung steht.

4. Anordnung nach Anspruch 3, dadurch gekennzeichnet, daß der Recheneinheit (4) die Signale aller den drei Raumrichtungen (x, y, z) zugeordneter Meßwandler (12a-c) im Tastkopf zugeführt sind un die Recheneinheit auf die Geschwindigkeitsregelkreise (9a-c) aller drei Maschinenachsen wirkt.

5. Anordnung nach Anspruch 3, dadurch gekennzeichnet, daß die Recheneinheit ein zur Steuerung aller Maschinenfunktionen verwendeter Prozessrechner ist.

6. Anordnung nach Anspruch 3, dadurch gekennzeichnet, daß die Recheneinheit (4) ein in die Positions- und Geschwindigkeitsregelkreise der Maschine geschalteter Mikroprozessor (5) ist.

**Claims**

1. A method for automatically measuring a workpiece (10) on a coordinate measuring machine wherein

a) a scanning pin (2) is guided continuously along the surface of the workpiece and signals generated by measurement transducers in the scanning head (15), upon deflection $\vec{A}$ of the scanning pin, are used both for forming the measured value and for controlling the machine drives (8a-c),

b) the magnitude $|\vec{V}_{des}|$ of path velocity resulting as vector sum from individual velocities ($V_i$) in the coordinate directions (i = x, y, z) is pre-established as a desired value and is held substantially constant,

c) the scanner deflection or the magnitude thereof $|\vec{A}_{des}|$ is also pre-established and is compared with the respective coordinate values of measured scanner deflection or the magnitude thereof $|\vec{A}_{act}|$,

d) a signal corresponding to the deviation $\Delta\vec{A}$ between the measured and pre-established scanner deflections, and a signal corresponding to the direction of the scanner deflection $\vec{A}_e$, are formed and used for correctively changing the direction $\vec{V}_e$ of the path velocity $\vec{V}_{act,}$,

e) directional changes of the path velocity proceed in accordance with the following rule of computation:

$$\vec{V}_2 = \frac{\vec{V}_0}{\vec{V}_0} \cdot |\vec{V}_{des}|, \qquad \text{wherein}$$

$$\vec{V}_0 = \vec{V}_1 + \frac{\vec{A}_{act}}{|\vec{A}_{act}|} \cdot \left( |\vec{A}_{des}| - |\vec{A}_{act}| \right) .$$

in which:

$\vec{V}_1$ is the velocity vector before a given change in direction,

$\vec{V}_2$ is the velocity vector after the given change in direction,

$\vec{A}_{act}$ is the measure deflection of the scanning pin,

$\vec{A}_{des}$ is the pre-established deflection of the scanning pin, and

$|\vec{V}_{des}|$ is the pre-established magnitude of the path velocity and

f) the scanning pin (2) is subjected to a constant measurement force which is independent of the amount of the deflection and which is substantially perpendicular to the direction of the path velocity $\vec{V}_e$, by actuators in the scanning head (e.g. moving coil systems).

2. A method according to claim 1, characterized by the fact that measuring the workpiece is effected with the scanning pin being predeflected.

3. An arrangement for controlling the traversable axes of a multi-coordinate measuring machine having

a) a scanning head (15) which contains measurement transducers (12a-c) which generate signals proportional to the deflection of a scanning pin (1, 2) in the individual coordinate directions (x, y, z),

b) drives (8a-c) for the machine axes, said signals being fed back to said drives,

c) a computer unit (4) which simultaneously controls at least two machine axes and to which the output signals of at least two measurement transducers (12) of the scanning head (15) are fed to, whereby

d) the deflection of the scanning pin or the magnitude thereof $|\vec{A}_{des}|$ and the magnitude $|\vec{V}_{des}|$ of the path velocity of the scanning movement can be entered as desired values into the computer unit (4),

e) the computer (4) freshly computes the direction of the path velocity corresponding to deviations of measured deflection of the scanning pin, said deviations being from the pre-established desired value, and the computer unit maintains the magnitude of recalculated path velocity substantially constant, by

f) generating signals corresponding to the components of the newly computed path velocity ($V_x$, $V_y$, $V_z$), which are fed as command variables to velocity-control circuits (9) associated with the transversable machine axes, characterized by the fact that

g) the scanning head comprises a device which applies a constant deflection-independent measurement force acting substantially perpendicular to the direction of the path velocity ($\vec{V}$) to the scanning pin (2) of the scanning head and

h) the pre-established value $\vec{A}_{des}$ of the deflection is chosen so small that substantially the total range of deflection of the scanning pin (2) is available as control deviation.

4. An arrangement according to claim 3, characterized by the fact that said transducers (12a-c) being respectively oriented for response in the three orthogonally related directions in space (x, y, z), the outputs of said transducers being fed to the computer unit (4), and the computer circuits (9a-c) of all three machine axes.

5. An arrangement according to claim 3, characterized by the fact that the computer unit is a process computer which is used control all machine functions.

6. An arrangement according to claim 3, characterized by the fact that the computer unit (4) is a microprocessor (5) which is connected to the position and velocity control circuits of the machine.

## Revendications

1. Procédé pour la mesure automatique d'une pièce d'œuvre (10) sur une machine de mesure à coordonnées dans lequel

a) La pointe de détecteur (2) de la machine de mesure est guidée de façon continue le long de la surface de pièce d'œuvre et les signaux émis pour un déplacement $\vec{A}$ de la pointe de détecteur par les transducteurs dans la tête de détecteur sont utilisés tant pour l'obtention de la valeur de mesure que pour la commande de l'entraînement de machine (8a à c).

b) La valeur $|\vec{v}_{consi}|$ de la vitesse sur la trajectoire résultant comme somme vectorielle des vitesses composantes ($v_i$) dans les directions de coordonnées (i = x, y, z) est donnée comme valeur de consigne et est maintenue sensiblement constante.

c) Le déplacement de détecteur ou sa valeur $|\vec{A}_{consi}|$ est de même donnée et il est mesuré avec le déplacement mesuré de détecteur ou sa valeur $|\vec{A}_{réel}|$.

d) Un signal correspondant à la différence $\Delta\vec{A}$ entre le déplacement mesuré et le déplacement donné ainsi qu'un signal correspondant à la direction du déplacement de détecteur $\vec{A}_e$ est obtenu et uti-

lisé pour la correction de la direction $\vec{v}_e$ de la vitesse de la trajectoire $\vec{v}_{réel}$,

e) La modification de la direction de la vitesse sur la trajectoire se produit selon la consigne de calcul suivante:

$$\vec{v}_2 = \frac{\vec{v}_0}{|\vec{v}_0|} \cdot |\vec{v}_{consi}| \qquad \text{avec:}$$

$$\vec{v}_0 = \vec{v}_1 + \frac{A_{réel}}{|\vec{A}_{réel}|} \cdot \left( |\vec{A}_{consi}| - |\vec{A}_{réel}| \right)$$

dans laquelle

$\vec{v}_1$ est le vecteur de vitesse avant la variation de direction

$\vec{v}_2$ est le vecteur de vitesse après la variation de direction

$\vec{A}_{réel}$ est le déplacement mesuré de pointe de détecteur

$\vec{A}_{consi}$ est le déplacement de détecteur donné

$|\vec{v}_{consi}|$ est la valeur donnée de la vitesse sur la trajectoire et

f) la pointe de détecteur est appliquée avec une force de mesure constante, indépendante du montant des déplacements sensiblement, perpendiculairement à la direction de la vitesse sur la trajectoire $\vec{v}_e$ par des actionneurs se trouvant dans la tête de détecteur, par exemple des systèmes électro-dynamiques.

2. Procédé selon la revendication 1, caractérisé en ce que la mesure de la pièce d'œuvre se produit avec la pointe de détecteur déplacée à l'avance.

3. Disposition de commande des axes mobiles d'une machine de mesure à cordonnées multiples avec

a) une tête de détecteur (15), qui contient des transducteurs (12a à c) qui émettent des signaux proportionnels au déplacement de la pointe de détecteur (1, 2) dans les directions des coordonnées composantes (x, y, z),

b) des entraînements (8a à c) pour les axes de machine sur lesquels les signaux sont couplés en rétroaction,

c) une unité de calcul (4) commandant au moins simultanément deux axes de machine, à laquelle sont amenés des signaux de sortie d'au moins deux transducteurs (12) de la tête de détecteur (15) asservis aux axes de machines influencées,

d) le déplacement de la pointe de détecteur ou sa valeur $|\vec{A}_{consi}|$ et la valeur $|\vec{v}_{consi}|$ de la vitesse sur la trajectoire du mouvement de détecteur pouvant être entré dans l'unité de calcul comme valeur de consigne, et

e) l'unité de calcul (4) calculant à nouveau la direction de la vitesse de trajectoire en fonction des écarts du déplacement mesuré de la pointe de détecteur par rapport à la valeur de consigne donnée et maintenant sensiblement constante la valeur de la vitesse sur la trajectoire nouvellement calculée, alors que

f) elle émet à partir des composants de la nouvelle vitesse sur la trajectoire $(v_x, v_y, v_z)$ des signaux correspondants, qui sont amenés aux circuits de régulation de vitesse (9) des axes de machine mobile comme grandeurs de commande, caractérisé en ce que

g) dans la tête de détecteur (15) il existe un dispositif, qui applique une force de mesure indépendante du déplacement, agissant sensiblement perpendiculairement à la direction de la vitesse sur la trajectoire $(\vec{v})$ avec une valeur constante sur la pointe de détection (2) de la tête de détection, et

h) la valeur de consigne du déplacement de la tête de détecteur est choisie suffisamment petite pour que sensiblement toute la zone de déplacement de la pointe de détecteur (2) est disponible comme écart de régulation.

4. Dispositif selon la revendication 3, caractérisé en que sont amenés à l'unité de calcul (4) les signaux de tous les transducteurs (12a à c) correspondant aux trois directions spatiales (x, y, z) et que l'unité de calcul agit sur les circuits de régulation de vitesse (9a à c) de la totalité des trois axes de machine.

5. Dispositif selon la revendication 3, caractérisé en ce que l'unité de calcul est un processeur utilisé pour la commande de toutes les fonctions de machine.

6. Dispositif selon la revendication 3, caractérisé en ce que l'unité de calcul (4) est un micro-processeur (5) monté dans les circuits de régulation de position et de vitesse de la machine.

Fig.1

EP 0 211 202 B1

Fig. 2

EP 0 211 202 B1